(19) Europäisches Patentamt
European Patent Office
Office européen des brevets

(11) **EP 4 697 562 A1**

(12) **EUROPEAN PATENT APPLICATION**
published in accordance with Art. 153(4) EPC

(43) Date of publication:
**18.02.2026 Bulletin 2026/08**

(21) Application number: **24854097.3**

(22) Date of filing: **12.07.2024**

(51) International Patent Classification (IPC):
**H02K 1/02** (2006.01)   **C22C 21/00** (2006.01)
**C22C 30/00** (2006.01)   **C22C 38/00** (2006.01)
**C22C 38/06** (2006.01)   **C23C 10/48** (2006.01)
**H01F 1/147** (2006.01)

(52) Cooperative Patent Classification (CPC):
**C22C 21/00; C22C 30/00; C22C 38/00;**
**C22C 38/06; C23C 10/48; H01F 1/147; H02K 1/02**

(86) International application number:
**PCT/JP2024/025273**

(87) International publication number:
**WO 2025/037506 (20.02.2025 Gazette 2025/08)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **14.08.2023 JP 2023132106**

(71) Applicant: **AISIN CORPORATION**
**Kariya-shi, Aichi 448-8650 (JP)**

(72) Inventors:
• NAKAGAWARA, Yuji
**Kariya-shi, Aichi 448-8650 (JP)**
• OKADA, Norikazu
**Kariya-shi, Aichi 448-8650 (JP)**

(74) Representative: **Kramer Barske Schmidtchen**
**Patentanwälte PartG mbB**
**European Patent Attorneys**
**Landsberger Strasse 300**
**80687 München (DE)**

(54) **MANUFACTURING METHOD, ROTARY ELECTRIC MACHINE, AND ELECTROMAGNETIC STEEL SHEET**

(57)   An appropriate stress state is imparted to an aluminum diffusion layer in which Al is diffused in an electromagnetic steel sheet. Disclosed is a rotary electric machine including: an iron core formed by laminating electromagnetic steel sheets; and a support member that supports the iron core. The electromagnetic steel sheet includes an aluminum diffusion layer, and the support member is disposed to introduce in-plane tensile stress into the aluminum diffusion layer.

## FIG. 1

S100 STEEL PREPARATION STEP → S102 ALUMINUM-CONTAINING LAYER FORMING STEP (ALUMINIZING) → S104 DIFFUSION TREATMENT STEP → S106 TENSILE STRESS GENERATING STEP

**Description**

TECHNICAL FIELD

The present disclosure relates to a manufacturing method, a rotary electric machine, and an electromagnetic steel sheet.

BACKGROUND ART

There is known a technology in which a plating layer is formed on the surface of an electromagnetic steel sheet by aluminizing treatment (hot-dip aluminum plating treatment) and then diffusion treatment is performed in a non-oxidizing atmosphere to create a state in which the Al concentration is gradient from the surface, thereby reducing loss in the electromagnetic steel sheet (see, for example, Patent Documents 1 and 2).

There is also known a technology in which an Al-containing slurry is applied to the surface of an electromagnetic steel sheet and then diffusion treatment is performed in a non-oxidizing atmosphere to create a state in which the Al concentration is gradient from the surface, thereby reducing loss in the electromagnetic steel sheet (see, for example, Patent Document 3).

There is also known a technology in which a plating layer is formed on the surface of an electromagnetic steel sheet by aluminizing treatment and then Al is infiltrated by long-term, high-temperature diffusion treatment in an oxidizing atmosphere to realize a grain-oriented electromagnetic steel sheet with an increased Al concentration, thereby reducing loss in the electromagnetic steel sheet (see, for example, Patent Document 4).

Related Art Documents

Patent Documents

Patent Document 1: German Patent No. 102005004037
Patent Document 2: European Patent Application Publication No. 1260598, DESCRIPTION
Patent Document 3: WO2021/155280
Patent Document 4: Japanese Unexamined Patent Application Publication (Translation of PCT Application) No. 2018-509522 (JP 2018-509522 A)

SUMMARY OF THE INVENTION

Problem to be Solved by the Invention

None of the above documents suggests that the stress state of an aluminum diffusion layer in which Al is diffused in an electromagnetic steel sheet can affect properties such as iron loss.

In one aspect, the present disclosure has an object to impart an appropriate stress state to an aluminum diffusion layer in which Al is diffused in an electromagnetic steel sheet.

Means for Solving the Problem

One aspect provides a rotary electric machine including:

an iron core formed by laminating electromagnetic steel sheets; and
a support member that supports the iron core, in which
the electromagnetic steel sheet includes an aluminum diffusion layer, and
the support member is disposed to introduce in-plane tensile stress into the aluminum diffusion layer.

Effects of the Invention

In one aspect, according to the present disclosure, it is possible to impart an appropriate stress state to the aluminum diffusion layer in which Al is diffused in the electromagnetic steel sheet.

BRIEF DESCRIPTION OF THE DRAWINGS

[FIG. 1] FIG. 1 is a flowchart schematically showing a flow of steps included in a manufacturing method according to an embodiment.
[FIG. 2] FIG. 2 is a diagram schematically showing a sectional structure of steel obtained by aluminizing treatment.
[FIG. 3] FIG. 3 is a diagram schematically showing a sectional structure of steel obtained by diffusion treatment.
[FIG. 4] FIG. 4 is a plan view schematically showing steel punched into a shape for a rotor core.
[FIG. 5] FIG. 5 is a schematic diagram showing an example of a stress state in part of the steel.
[FIG. 6] FIG. 6 is an explanatory diagram of an Al infiltration amount calculation method (part 1).
[FIG. 7] FIG. 7 is an explanatory diagram of the Al infiltration amount calculation method (part 2).

MODES FOR CARRYING OUT THE INVENTION

Embodiments will be described in detail below with reference to the accompanying drawings. The dimensional ratios in the drawings are merely illustrative, and are not limited to these. The shapes etc. in the drawings may be partially exaggerated for convenience of description. In the following description, various substances may be identified by commonly known abbreviations or chemical symbols, as typified by aluminium being referred to as aluminum (or Al). When a phenomenon of interatomic distance increase occurs, it is hereinafter expressed as generation of tensile stress in the direction of the increase.

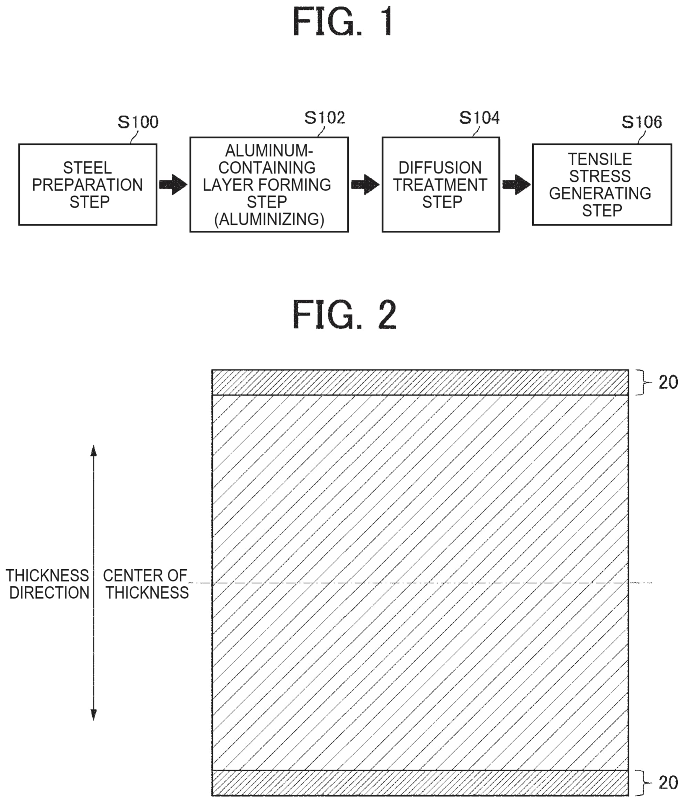

FIG. 1 is a flowchart schematically showing a flow of steps included in a manufacturing method according to the present embodiment. FIG. 2 is a diagram schematically showing a sectional structure of steel obtained by aluminizing treatment (steel after aluminizing treatment).

The manufacturing method of the present embodiment first includes a step of preparing steel (base material) having a desired thickness (step S100). The steel having a desired thickness can be obtained, for example, by rolling a material (e.g., in the form of a steel slab or steel billet) obtained by casting etc.

The desired thickness of the steel is any thickness, but may be, for example, 0.20 mm to 0.35 mm, and more preferably 0.25 mm to 0.30 mm.

In the present embodiment, the steel is used for an electromagnetic steel sheet, and preferably contains Si and Al. This is because the addition of Si and Al to steel reduces magnetocrystalline anisotropy and reduces hysteresis loss. This is also because the addition of Si and Al increases the electrical resistance of steel and therefore contributes to reducing eddy current loss. Thus, the addition of Si and Al leads to reduction in iron loss (hysteresis loss and eddy current loss) of steel. Excessive addition of Si and Al not only reduces the magnetic flux density but also reduces the workability in the manufacturing process for steel (rolling, pressing, etc.). The final product such as an electromagnetic steel sheet may be pressed into a desired shape to form a rotor core, a stator core, etc. of a rotary electric machine. In consideration of such tradeoffs, the steel (base material) preferably contains Si in a range of more than 0.00 mass% and 7.00 mass% or less, and Al in a range of more than 0.00 mass% and 2.00 mass% or less.

Next, the manufacturing method of the present embodiment includes an aluminum-containing layer forming step (step S102) for forming an aluminum-containing layer (see reference sign 20 in FIG. 2) on the steel. The aluminum-containing layer 20 can be formed, for example, by aluminizing treatment. For example, the aluminum-containing layer is in the form of a plating layer having a thickness in a range of 2 $\mu$m or more and 30 $\mu$m or less. For example, the plating layer having a thickness in the range of 2 $\mu$m or more and 30 $\mu$m or less may be formed by gas wiping.

In a modification, the aluminum-containing layer may be formed by a process of applying an aluminum-containing slurry instead of the aluminizing treatment. However, the application of the aluminum-containing slurry is disadvantageous in that it is difficult to infiltrate Al into the steel sheet in the subsequent diffusion treatment.

The composition of the aluminum-containing layer (plating layer) may be aluminum alone, for example, in a case of an aluminum-containing layer formed by sputtering. Alternatively, the composition of the aluminum-containing layer (plating layer) includes, in addition to aluminum, one or more of iron (Fe), silicon (Si), and manganese (Mn). The composition preferably includes Al, Fe, and Si. For example, the plating layer may contain Al in a range of 20 mass% or more and 100 mass% or less, Fe in a range of 0.00 mass% or more and 80 mass% or less, and Si in a range of 0.00 mass% or more and 15 mass% or less. The plating layer may be a single layer or multiple layers.

Next, the manufacturing method of the present embodiment includes a diffusion treatment step (step S104) for performing diffusion treatment on the steel having the aluminum-containing layer.

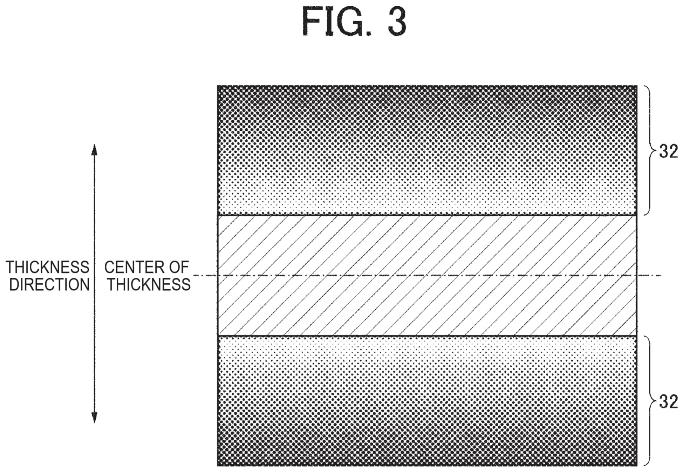

The diffusion treatment is treatment for creating a state in which the Al concentration is gradient from the steel surface based on Al contained in the aluminum-containing layer. That is, in the diffusion treatment, Al contained in the aluminum-containing layer is diffused from the steel surface in the thickness direction to form an Al diffusion layer (see reference sign 32 in FIG. 3). The Al diffusion layer may have an Al concentration gradient (change gradient) in which the Al concentration increases toward the surface in the thickness direction.

The diffusion treatment may be performed under a predefined temperature condition for a predefined treatment period (hereinafter also referred to as "diffusion period").

The desired aluminum diffusion state is basically any state as long as the Al diffusion layer has the Al concentration gradient (change gradient).

The Al diffusion layer has an Al concentration gradient (change gradient) in which the Al concentration increases toward the surface in the thickness direction. Specifically, in the Al diffusion layer, the Al concentration is highest on the surface of the Al diffusion layer, and gradually decreases toward the center of the thickness. In a modification, the Al concentration may be substantially constant in the Al diffusion layer.

Next, the manufacturing method of the present embodiment includes a tensile stress generating step (step S106) for introducing in-plane tensile stress into the Al diffusion layer.

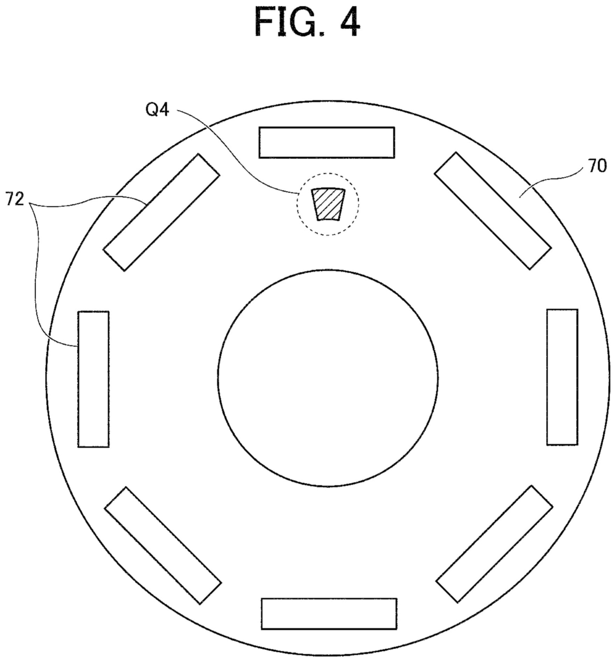

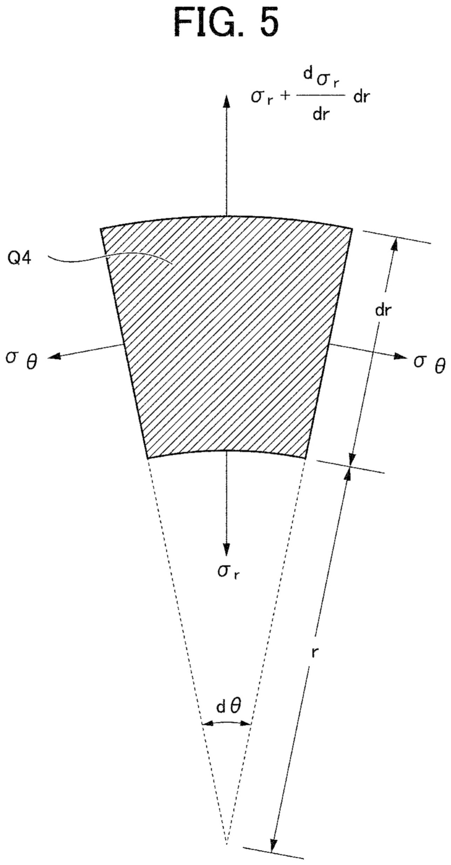

FIG. 4 is a plan view schematically showing steel punched into a shape for a rotor core. For example, steel 70 punched into a shape for a rotor core will be described. Although the steel 70 has magnet holes 72, any shape and arrangement of the magnet holes 72 may be adopted, and the magnet holes 72 may be omitted. FIG. 5 is a schematic diagram showing an example of a stress state in part Q4 of the steel 70. FIG. 5 schematically shows an example of a stress state occurring in a portion within a range of a radius r + dr and an angle $d\theta$. $\sigma\theta$ represents a circumferential stress, and $\sigma r$ represents a radial ability.

The tensile stress is desirably generated along a direction in which a magnetic flux is formed, and may be generated, for example, in substantially all directions as shown in FIG. 5 in any part Q4 (see FIG. 4) of the steel 70.

Any method may be adopted to generate tensile stress. For example, the tensile stress may be generated by an insulating film that may be formed on the Al diffusion layer, or may be generated by a support member (e.g., a nut or an end plate) in an assembled state of the rotary electric machine. In this case, the method for manufacturing the rotary electric machine includes a step of supporting a laminated core with the support member in a manner that tensile stress is generated. In this case, the laminated core is formed by laminating the steel including the above Al diffusion layer. The laminated core forms a rotor core, a stator core, etc.

As described above, with the manufacturing method of the present embodiment, the tensile stress can be generated in the electromagnetic steel sheet including the Al diffusion layer in which Al is diffused with the Al concentration gradient (change gradient). The effect produced by generating the tensile stress will be described in detail with reference to the following examples.

Examples

Next, several examples of steel actually treated by the inventors of the present application using the manufacturing method according to the present embodiment will be described.

The inventors of the present application prepared one type of steel (denoted as steel type C) having component properties shown in Table 1 below, and performed treatment based on the manufacturing method according to the present embodiment, thereby obtaining results shown in Table 2. Specifically, in Example 1 etc., a single test piece (rectangular shape having a size of 20 × 50 mm) was cut out using a laser from a steel sheet having the chemical components shown in Table 1, and the test piece was subjected to aluminizing treatment to obtain a plating thickness shown in Table 2. After the aluminizing treatment, diffusion treatment was performed under the conditions shown in Table 2. In Comparative Examples 6 to 8, the aluminizing treatment and the diffusion treatment were not performed.

Each steel of steel type C contains Si at 0 to 7.00 mass%, Mn at 0 to 1.00 mass%, and Al at 0 to 2.00 mass%. The base material having such a composition is preferable, but the base material is not limited to this. In Table 2, "mass%" means percent by mass.

[Table 1]

| Steel type | Components (mass%) | | | | | |
|---|---|---|---|---|---|---|
| | C | Si | Mn | s | Al | N |
| C | 0.007 | 3.12 | 0.56 | 0.001 | 1.08 | 0.002 |

[Table 2]

| Category | Steel type | Base material components (mass%) | | | Plating thickness by aluminizing treatment (μm) | Diffusion treatment | | | 1 hickness (μm) |
|---|---|---|---|---|---|---|---|---|---|
| | | Si | Mn | Al | | Atmosphere | Temperature (°C) | Time (min) | |
| Comparative Example 1 | C | 3.12 | 0.56 | 1.08 | 26 | H2, 02, Ar | 1050 | 60 | 277 |
| Comparative Example 2 | C | 3.12 | 0.56 | 1.08 | 26 | H2, 02, Ar | 1050 | 180 | 280 |
| Example 1 | C | 3.12 | 0.56 | 1.08 | 39 | Air | 1050 | 120 | 278 |
| Example 2 | C | 3.12 | 0.56 | 1.08 | 39 | Air | 1050 | 240 | 281 |
| Comparative Example 3 | C | 3.12 | 0.56 | 1.08 | 12 | Air | 1050 | 1 | 254 |
| Comparative Example 4 | C | 3.12 | 0.56 | 1.08 | 27 | Air | 1050 | 120 | 272 |
| Example 3 | C | 3.12 | 0.56 | 1.08 | 27 | Air | 1050 | 120 | 272 |
| Example 4 | C | 3.12 | 3.12 | 1.08 | 27 | Air | 1050 | 120 | 272 |
| Example 5 | C | 3.12 | 0.56 | 1.08 | 27 | Air | 1050 | 120 | 272 |
| Example 6 | C | 3.12 | 0.56 | 1.08 | 27 | Air | 1050 | 120 | 272 |
| Example 7 | C | 3.12 | 0.56 | 1.08 | 27 | Air | 1050 | 120 | 272 |
| Comparative Example 5 | C | 3.12 | 0.56 | 1.08 | 30 | Air | 1050 | 240 | 277 |
| Example 8 | C | 3.12 | 0.56 | 1.08 | 30 | Air | 1050 | 240 | 277 |
| Example 9 | C | 3.12 | 0.56 | 1.08 | 30 | Air | 1050 | 240 | 277 |
| Example 10 | C | 3.12 | 0.56 | 1.08 | 30 | Air | 1050 | 240 | 277 |
| Example 11 | C | 3.12 | 0.56 | 1.08 | 30 | Air | 1050 | 240 | 277 |
| Comparative Example 6 | C | 3.12 | 0.56 | 1.08 | - | - | - | - | 248 |
| Comparative Example 7 | C | 3.12 | 0.56 | 1.08 | - | - | - | - | 248 |
| Comparative | C | 3.12 | 0.56 | 1.08 | - | - | - | - | 248 |

[Table 3]

| Category | Evaluation 1 | | | | | | | |
|---|---|---|---|---|---|---|---|---|
| | Diffusion layer | | | | | Coating | | |
| | Surface Al concentration (mass%) | Central Al concentration (mass%) | Diffusion depth (μm) | Diffusion depth-thickness ratio | Al gradient (mass%/μm) | Type | Film forming temperature | Thickness (μm) |
| Comparative Example 1 | 10.3 | 5.44 | 139 or more | 0.50 or more | 0.035 | Al-based oxide | Equal to temperature of diffusion treatment | 0.9 |

(continued)

| Category | Evaluation 1 | | | | | | | |
| | Diffusion layer | | | | | Coating | | |
| | Surface Al concentration (mass%) | Central Al concentration (mass%) | Diffusion depth (μm) | Diffusion depth-thickness ratio | Al gradient (mass%/μm) | Type | Film forming temperature | Thickness (μm) |
|---|---|---|---|---|---|---|---|---|
| Comparative Example 2 | 7.6 | 6.95 | 140 or more | 0.50 or more | 0.005 | " | " | 0.9 |
| Example 1 | 8.2 | 6.59 | 139 or more | 0.50 or more | 0.012 | " | " | 8 |
| Example 2 | 8.2 | 7.47 | 141 or more | 0.50 or more | 0.005 | " | " | 13 |
| Comparative Example 3 | 15.8 | 1.08 | 65 | 0.26 | 0.226 | " | " | 2.5 |
| Comparative Example 4 | 8.1 | 6.72 | 136 or more | 0.50 or more | 0.010 | " | " | 9 |
| Example 3 | 8.1 | 6.72 | 136 or more | 0.50 or more | 0.010 | " | " | 9 |
| Example 4 | 8.1 | 6.72 | 136 or more | 0.50 or more | 0.010 | " | " | 9 |
| Example 5 | 8.1 | 6.72 | 136 or more | 0.50 or more | 0.010 | " | " | 9 |
| Example 6 | 8.1 | 6.72 | 136 or more | 0.50 or more | 0.010 | " | " | 9 |
| Example 7 | 8.1 | 6.72 | 136 or more | 0.50 or more | 0.010 | " | " | 9 |
| Comparative Example 5 | 7.2 | 6.98 | 139 or more | 0.50 or more | 0.002 | " | " | " |
| Example 8 | 7.2 | 6.98 | 139 or more | 0.50 or more | 0.002 | " | " | " |
| Example 9 | 7.2 | 6.98 | 139 or more | 0.50 or more | 0.002 | " | " | " |
| Example 10 | 7.2 | 6.98 | 139 or more | 0.50 or more | 0.002 | " | " | " |
| Example 11 | 7.2 | 6.98 | 139 or more | 0.50 or more | 0.002 | " | " | " |
| Comparative Example 6 | - | - | - | - | - | " | " | |
| Comparative Example 7 | - | - | - | - | - | " | " | - |
| Comparative Example 8 | - | - | - | - | - | " | " | - |

[Table 4]

| Category | Evaluation 1 | | |
|---|---|---|---|
| | Diffusion layer | | |
| | Al gradient-thickness ratio (mass%/[μm]^2) | Al infiltration amount (mass%·μm) | Al infiltration amount-thickness ratio (mass%) |
| Comparative Example 1 | 0.000126 | 944 | 3.41 |
| Comparative Example 2 | 0.000018 | 867 | 3.10 |
| Example 1 | 0.000043 | 878 | 3.16 |
| Example 2 | 0.000018 | 952 | 3.39 |
| Comparative Example 3 | 0.000890 | 478 | 1.88 |
| Comparative Example 4 | 0.000037 | 861 | 3.17 |
| Example 3 | 0.000037 | 861 | 3.17 |
| Example 4 | 0.000037 | 861 | 3.17 |
| Example 5 | 0.000037 | 861 | 3.17 |
| Example 6 | 0.000037 | 861 | 3.1 |
| Example 7 | 0.000037 | 861 | 3.17 |
| Comparative Example 5 | 0.000007 | 835 | 3.01 |
| Example 8 | 0.000007 | 835 | 3.0 |
| Example 9 | 0.000007 | 835 | 3.0 |
| Example 10 | 0.000007 | 835 | 3.01 |
| Example 11 | 0.000007 | 835 | 3.01 |
| Comparative Example 6 | - | - | - |
| Comparative Example 7 | - | - | - |
| Comparative Example 8 | - | - | - |

[Table 5]

| Category | Evaluation 2 | | | | | |
|---|---|---|---|---|---|---|
| | Magnetic measurement | Iron loss W10/400 (W/kg) | Iron loss reduction rate (%) | Magnetic flux density B50 (T) | Magnetic flux density decrease rate (%) | Introduced stress (MPa) |
| Comparative Example 1 | Single sheet | 13.0 | 8 | 1.38 | 14 | - |
| Comparative Example 2 | Single sheet | 12.7 | 10 | 1.37 | 14 | - |
| Example 1 | Single sheet | 10.6 | 25 | 1.36 | 15 | - |
| Example 2 | Single sheet | 10.3 | 27 | 1.38 | 14 | - |
| Comparative Example 3 | Single sheet | 20.1 | -42 | 1.13 | 29 | - |
| Comparative Example 4 | Load application (where load = 0) | 12.0 | 5 | 1.41 | 13 | 0 |
| Example 3 | Load application | 11.0 | 13 | 1.41 | 13 | 10 |

(continued)

| Category | Evaluation 2 | | | | | |
|---|---|---|---|---|---|---|
| | Magnetic measurement | Iron loss W10/400 (W/kg) | Iron loss reduction rate (%) | Magnetic flux density B50 (T) | Magnetic flux density decrease rate (%) | Introduced stress (MPa) |
| Example 4 | Load application | 9.9 | 22 | 1.43 | 12 | 50 |
| Example 5 | Load application | 9.6 | 24 | 1.45 | 11 | 70 |
| Example 6 | Load application | 9.5 | 25 | 1.46 | 10 | 90 |
| Example 7 | Load application | 9.3 | 26 | 1.46 | 10 | 120 |
| Comparative Example 5 | Load application (where load = 0) | 12.9 | -2 | 1.38 | 15 | 0 |
| Example 9 | Load application | 11.9 | 6 | 1.38 | 15 | 10 |
| Example 10 | Load application | 10.2 | 19 | 1.40 | 14 | 50 |
| Example 11 | Load application | 10.0 | 21 | 1.41 | 13 | 70 |
| Example 12 | Load application | 9.8 | 22 | 1.41 | 13 | 90 |
| Comparative Example 6 | Load application (where load = 0) | 12.6 | 0 | 1.62 | 0 | 0 |
| Comparative Example 7 | Load application | 12.0 | 5 | 1.62 | 0 | 10 |
| Comparative Example 8 | Load application | 13.7 | -8 | 1.62 | 0 | 50 |

As a result, results shown in Tables 3, 4, and 5 were obtained. Evaluation 1 shown in Tables 3 and 4 is an evaluation based on FE (Field Emission)-EPMA (Electron Probe Micro Analyzer) analysis. In Table 3, the symbol ″″″ represents "ditto." In this test, the type of the coating and the film forming temperature (of the coating) were the same in each example and each comparative example in that the type of the coating was an aluminum-based oxide and the film forming temperature was equal to the temperature of the diffusion treatment. The iron loss in Evaluation 2 shown in Table 5 is the result of alternating-current magnetic measurement, and the magnetic flux density in Evaluation 2 is the result of measurement using an initial magnetization curve of alternating current (50 Hz). The diffusion depth-thickness ratio is a value obtained by dividing the diffusion depth by the thickness. In Table 5, the magnetic flux density is a magnetic flux density (B50) at a magnetizing force of 5000 A/m, and the iron loss is an iron loss (W10/400) at a frequency of 400 Hz and a magnetic flux density of 1.0 T. In Table 5, the iron loss reduction rate is a rate obtained by dividing the amount of reduction in iron loss from that of an untreated product by the iron loss of the untreated product.

In Table 4, when the infiltration amount of aluminum in the Al diffusion layer (hereinafter also referred to as "Al infiltration amount") is calculated based on the aluminum diffusion depth and the aluminum concentration at the center of the base material thickness (hereinafter also referred to as "central Al concentration"), the Al infiltration amount-thickness ratio is a value obtained by dividing the Al infiltration amount by the base material thickness. Specifically, in this test, the Al infiltration amount was calculated as follows based on the aluminum diffusion depth, the surface Al concentration, and the central Al concentration.

When aluminum diffusion depth < base material thickness / 2, Al infiltration amount = (surface Al concentration - central Al concentration) × aluminum diffusion depth × 1/2

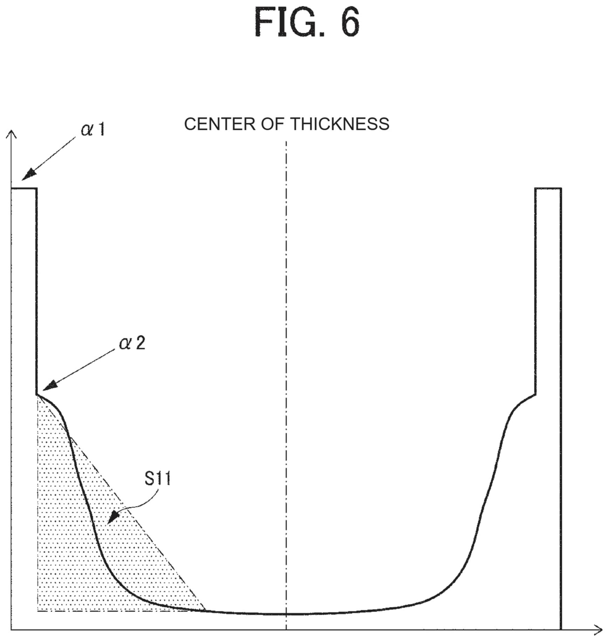

In this case, the Al infiltration amount corresponds to an area S11 of a triangle indicated by a long dashed short dashed line in FIG. 6. In this case, the three vertices of the triangle correspond to, as shown in FIG. 6, a position corresponding to the base material surface and the surface Al concentration, a position corresponding to the base material surface and the central Al concentration, and a position corresponding to an inner side from the base material surface by the aluminum diffusion depth and the central Al concentration.

When aluminum diffusion depth ≥ base material thickness / 2, Al infiltration amount = (surface Al concentration + central Al concentration - base material Al concentration × 2) × aluminum diffusion depth × 1/2

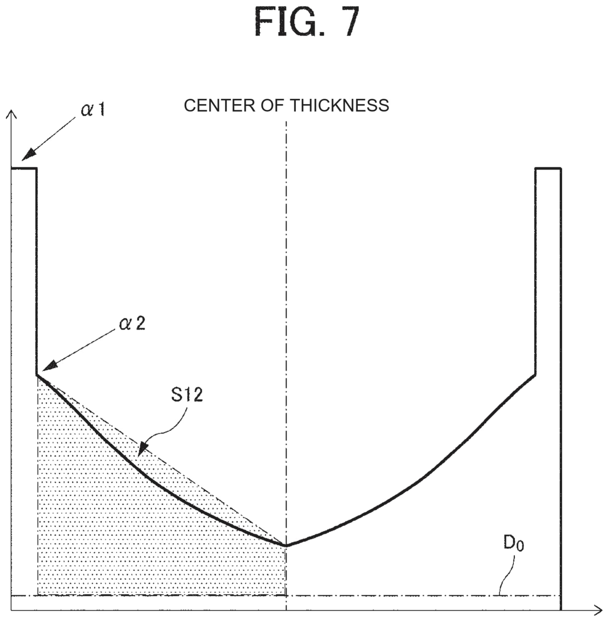

In this case, the Al infiltration amount corresponds to an area S12 of a trapezoid indicated by a long dashed short dashed line in FIG. 7. In this case, the four vertices of the trapezoid correspond to, as shown in FIG. 7, a position corresponding to the base material surface and the surface Al concentration, a position corresponding to the base material surface and the base material Al concentration, a position corresponding to an inner side from the base material surface by the aluminum diffusion depth and the central Al concentration, and a position corresponding to the inner side from the base material surface by the aluminum diffusion depth and the base material Al concentration.

The case where aluminum diffusion depth ≥ base material thickness / 2 corresponds to the case where the diffusion depth-thickness ratio is 0.50 or more in Table 3. The base material Al concentration corresponds to the base material components in Table 2 (see $D_0$ in FIG. 7 as well). The base material thickness corresponds to the thickness in Table 2, and is a thickness obtained by subtracting the thickness of the coating from the overall thickness.

FIGS. 6 and 7 show the Al concentration profiles when an oxide layer is formed on the Al diffusion layer. In FIGS. 6 and 7, $\alpha1$ represents an Al concentration in the insulating coating (oxide layer), and $\alpha2$ represents an Al concentration on the surface of the Al diffusion layer.

The Al gradient-thickness ratio is the change gradient of the aluminum concentration with respect to the change in the thickness direction in the Al diffusion layer. The Al gradient-thickness ratio is a value obtained by dividing the Al gradient by the base material thickness. Specifically, in this test, the Al gradient was calculated as follows.

Al gradient = (surface Al concentration - central Al concentration) / aluminum diffusion depth

The base material thickness corresponds to the thickness in Table 2, and is a thickness obtained by subtracting the thickness of the coating from the overall thickness.

The case where a load is applied using a magnetic measurement method will be described with continued reference to Tables 2, 3, 4, and 5.

In Tables 2 to 5, Example 3 onwards and Comparative Example 6 onwards correspond to the case where a load is applied using the magnetic measurement method. Comparative Example 6 onwards corresponds to the case where the aluminizing treatment and the diffusion treatment were not performed. That is, Comparative Example 6 onwards shows the characteristics of the base material itself.

In this test, the load was applied in a tensile direction to observe the effect of the tensile stress described above. The parameter value corresponding to the magnitude of the applied load when the load was applied is shown in Table 5 under "Introduced stress." That is, in this test, magnetic measurement was performed in a state in which the tensile stress was applied.

Comparing Example 3 onwards with Comparative Example 4 onwards, it is understood that the iron loss reduction rate is significantly larger in the state in which the tensile stress is applied. It is also understood that, when the aluminizing treatment and the diffusion treatment are performed, the iron loss reduction rate is significantly larger in the state in which the tensile stress is applied than when the aluminizing treatment and the diffusion treatment are not performed (Comparative Example 6 onwards). In Example 3 onward, the magnetic flux density decrease rate is 25% or less, and the magnetic flux density decrease rate in the state in which the tensile stress is applied is also good.

Therefore, the steel sheet including the above Al diffusion layer is suitable for forming a laminated core (stator core or rotor core) of a rotary electric machine in the state in which the tensile stress is applied. In this regard, any method may be adopted to create the state in which the tensile stress is applied. The state in which the tensile stress is applied may be achieved, for example, by a support step in which the laminated core is pressed in the axial direction with a support member such as a nut.

Alternatively, when a coating is provided to the steel sheet including the Al diffusion layer in addition to or instead of the oxide layer, the coating may be formed in a manner that the tensile stress is generated.

In Examples 1 and 2, it is predicted that the tensile stress is generated due to a difference in thermal expansion coefficient between the coating and the Al diffusion layer. In Comparative Examples 1 and 2, the thickness of the coating is small as shown in Table 3, and the tensile stress is not generated. Due to such differences, there are significant differences in iron loss reduction rate between Examples 1 and 2 and Comparative Examples 1 and 2 as shown in Table 5.

Even in the steel sheets according to Comparative Examples 1 and 2, a new insulating film may be separately provided to generate the tensile stress in the Al diffusion layer. Alternatively, as described above, the tensile stress may be generated in the laminated core with the support member such as a nut.

Although the embodiments are described in detail above, the present disclosure is not limited to the specific embodiments, and various modifications and changes can be made within the scope of the claims. It is also possible to combine all or part of the constituent elements of the embodiments described above.

For example, in the above embodiment, the diffusion treatment may be performed immediately after the formation of the Al-containing layer, or may be performed after the formation of the Al-containing layer and processing such as pressing. The Al-containing layer may be formed by a method other than aluminizing or slurry, such as deposition, sputtering, calorizing, shot peening, or foil bonding.

Description of the Reference Numerals

20 ... aluminum-containing layer (aluminium-containing layer), 32 ... Al diffusion layer (aluminum diffusion layer)

**Claims**

1. A rotary electric machine comprising:

   an iron core formed by laminating electromagnetic steel sheets; and
   a support member that supports the iron core, wherein
   the electromagnetic steel sheet includes an aluminum diffusion layer, and
   the support member is disposed to introduce in-plane tensile stress into the aluminum diffusion layer.

2. A rotary electric machine comprising an iron core formed by laminating electromagnetic steel sheets, wherein

   the electromagnetic steel sheet includes:

   a coating on a surface of a base material; and
   an aluminum diffusion layer, and

   the coating is formed to introduce in-plane tensile stress into the aluminum diffusion layer.

3. The rotary electric machine according to claim 1 or 2, wherein the aluminum diffusion layer has an aluminum concentration that gradually decreases from a surface of a base material toward a center of a thickness of the base material.

4. An electromagnetic steel sheet comprising:

   a coating on a surface of a base material; and
   an aluminum diffusion layer in which an aluminum concentration gradually decreases from the surface of the base material toward a center of a thickness of the base material, wherein the coating is formed to introduce in-plane tensile stress into the aluminum diffusion layer.

5. An electromagnetic steel sheet comprising an aluminum diffusion layer into which in-plane tensile stress is introduced.

6. The electromagnetic steel sheet according to claim 4 or 5, wherein the aluminum diffusion layer has an aluminum concentration that gradually decreases from a surface of a base material toward a center of a thickness of the base material.

7. A manufacturing method for a rotary electric machine, the manufacturing method comprising:

   a step of forming an aluminum diffusion layer on steel for an electromagnetic steel sheet with an aluminum-containing layer formed on a surface of the steel; and
   a step of forming an insulating coating on a surface of a base material to introduce tensile stress into the aluminum diffusion layer.

8. A manufacturing method for a rotary electric machine, the manufacturing method comprising:

a step of forming an aluminum diffusion layer on steel for an electromagnetic steel sheet with an aluminum-containing layer formed on a surface of the steel;
a step of laminating the steel to form an iron core; and
a support step of supporting the iron core with a support member to introduce tensile stress into the aluminum diffusion layer.

# FIG. 1

# FIG. 2

# FIG. 3

THICKNESS DIRECTION | CENTER OF THICKNESS

32

32

# FIG. 4

# FIG. 5

# FIG. 6

CENTER OF THICKNESS

α1

α2

S11

# FIG. 7

## INTERNATIONAL SEARCH REPORT

| International application No. |
| --- |
| **PCT/JP2024/025273** |

**A.    CLASSIFICATION OF SUBJECT MATTER**

*H02K 1/02*(2006.01)i; *C22C 21/00*(2006.01)i; *C22C 30/00*(2006.01)i; *C22C 38/00*(2006.01)i; *C22C 38/06*(2006.01)i; *C23C 10/48*(2006.01)i; *H01F 1/147*(2006.01)i

FI:    H02K1/02 Z; C22C21/00 N; C22C30/00; C22C38/00 303U; C22C38/06; C23C10/48; H01F1/147 183

According to International Patent Classification (IPC) or to both national classification and IPC

**B.    FIELDS SEARCHED**

Minimum documentation searched (classification system followed by classification symbols)

H02K1/02; C22C21/00; C22C30/00; C22C38/00; C22C38/06; C23C10/48; H01F1/147

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2013-102579 A (SINFONIA TECHNOLOGY CO., LTD.) 23 May 2013 (2013-05-23) paragraphs [0017]-[0021], fig. 1-2 | 1-8 |
| Y | JP 2022-030684 A (JFE STEEL CORPORATION) 18 February 2022 (2022-02-18) paragraph [0045], [0052], fig. 1 | 1-8 |
| A | JP 2018-021242 A (NIPPON STEEL & SUMITOMO METAL CORPORATION) 08 February 2018 (2018-02-08) | 1-8 |
| A | JP 2011-119298 A (JFE STEEL CORPORATION) 16 June 2011 (2011-06-16) | 1-8 |
| A | JP 2014-196539 A (JFE STEEL CORPORATION) 16 October 2014 (2014-10-16) | 1-8 |

☐ Further documents are listed in the continuation of Box C.        ☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"    later document published after the international filing date or priority date and not in conflict with the application but cited to understand the principle or theory underlying the invention

"X"    document of particular relevance; the claimed invention cannot be considered novel or cannot be considered to involve an inventive step when the document is taken alone

"Y"    document of particular relevance; the claimed invention cannot be considered to involve an inventive step when the document is combined with one or more other such documents, such combination being obvious to a person skilled in the art

"&"    document member of the same patent family

| Date of the actual completion of the international search | Date of mailing of the international search report |
| --- | --- |
| **17 September 2024** | **01 October 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/025273**

| Patent document cited in search report | | | Publication date (day/month/year) | Patent family member(s) | | Publication date (day/month/year) |
|---|---|---|---|---|---|---|
| JP | 2013-102579 | A | 23 May 2013 | (Family: none) | | |
| JP | 2022-030684 | A | 18 February 2022 | (Family: none) | | |
| JP | 2018-021242 | A | 08 February 2018 | (Family: none) | | |
| JP | 2011-119298 | A | 16 June 2011 | WO | 2011/065023 A1 | |
| | | | | CN | 102639745 A | |
| | | | | TW | 201134953 A | |
| | | | | KR 10-2012-0112435 | A | |
| JP | 2014-196539 | A | 16 October 2014 | (Family: none) | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102005004037
- EP 1260598 A
- WO 2021155280 A
- JP 2018509522 A